# FASCICULE DE BREVET EUROPEEN

(11) **EP 1 213 457 B1**
(45) Date de publication et mention de la délivrance du brevet: **02.11.2006**
(21) Numéro de dépôt: 01403077.9
(22) Date de dépôt: 30.11.2001
(51) Int. Cl.: F02D 19/06

(54) **Méthode de gestion d'un moteur à combustion interne fonctionnant en mono ou en bicarburation avec injection directe d'essence**
Verfahren zur Steuerung einer Ein- oder Zweibrennstoffmaschine mit Kraftstoffdirekteinspritzung
Method of controlling a single or dual fuel engine with direct fuel injection

(30) Priorité: 11.12.2000 FR 0016109
(43) Date de publication de la demande: 12.06.2002
(73) Titulaire: Institut Français du Pétrole, 92852 Rueil-Malmaison Cedex (FR)
(72) Inventeur: Tilagone, Richard, 38138 Les Côtes d'Arey (FR); Monnier, Gaétan, 92500 Rueil Malmaison (FR)

(56) Documents cités:
- WO-A-99/42718
- GB-A- 2 327 983
- US-A- 4 411 243
- US-A- 5 950 603
- US-A- 6 044 806
- US-A- 6 148 802
- PATENT ABSTRACTS OF JAPAN vol. 2000, no. 09, 13 octobre 2000 (2000-10-13) & JP 2000 179368 A (NISSAN MOTOR CO LTD), 27 juin 2000 (2000-06-27)

## Description

La présente invention concerne une méthode de gestion d'un moteur à combustion interne fonctionnant en monocarburation ou en bicarburation avec injection directe d'essence.

Comme il est connu, notamment par le document US 5 975 050, un moteur pouvant fonctionner avec deux carburants de nature différente, se conçoit généralement selon deux modes de carburation distincts :
- un premier mode, dit de monocarburation, dans lequel un carburant généralement en phase liquide est la seule source d'énergie concernée par la combustion.
   C'est par exemple le cas lorsque du gazole est injecté directement dans les chambres de combustion du moteur (injection directe) ou dans une chambre de précombustion (injection indirecte).
- un second mode de bicarburation proprement dit, dans lequel une proportion variable de l'énergie totale introduite provient d'un carburant gazeux pré-mélangé avec l'air dans le conduit d'admission, ce carburant gazeux étant associé à un carburant liquide.
   C'est par exemple le cas lorsqu'une quantité variable de gazole est injectée directement dans les cylindres en complément.
   Dans ce cas, deux modes de combustion sont présents dans le même cycle moteur, une auto-inflammation du gazole et une combustion du mélange beaucoup plus inerte air/gaz par propagation d'un front de flamme initiée par l'auto-inflammation pilote du gazole.

Dans le second mode, une faible quantité de carburant liquide sert donc à « amorcer » la combustion d'un carburant gazeux.

On comprend ainsi l'intérêt de l'utilisation de gazole en guise d'injection pilote, celui-ci présentant d'excellentes propriétés d'auto-inflammation.

Des procédés et appareils permettant de contrôler la distribution des carburants et de l'injection pilote ainsi que la transition entre les deux modes de fonctionnement du moteur sont connus de l'art antérieur. On peut citer à titre d'exemple exemple les brevets US 5 450 829 et US 5 975 050 ainsi que les demandes internationales WO 99/45256 et WO 99/46495.

Depuis de nombreuses années, la demanderesse a effectué de nombreuses recherches permettant d'aboutir à la mise au point de moteurs à injection directe d'essence.

Ces recherches ont permis de mettre en avant que la technologie d'injection directe d'essence était applicable dans des moteurs pouvant fonctionner en mode de bicarburation, cette essence pouvant jouer le rôle rempli jusqu'à maintenant par le gazole.

Ainsi, la présente invention propose un nouveau concept reposant sur une adaptation de moteurs à injection directe d'essence pour le fonctionnement en mono ou bicarburation, et ce sur la majeure partie de la plage de fonctionnement du moteur, c'est à dire en tout point de fonctionnement où cette approche est technologiquement possible.

L'invention permet ainsi de réduire la consommation de carburant, d'obtenir un meilleur comportement du moteur lors des phases transitoires (à froid ou lors des accélérations par exemple) tout en maintenant un niveau acceptable d'émission de certains polluants (monoxyde de carbone, hydrocarbures imbrûlés).

De plus, grâce à l'invention, il est possible d'appliquer la présente méthode à un moteur fonctionnant suivant une bicarburation gaz/essence, à la stoechiométrie (richesse 1) ou en mélange global pauvre.

Le carburant gazeux utilisé est typiquement du gaz naturel pour véhicule (GNV) ou du gaz de pétrole liquéfié (GPL-C).

Selon l'invention, une méthode de gestion d'un moteur à combustion interne pouvant fonctionner en bicarburation est caractérisée en ce qu'elle comprend :
- des phases de monocarburation, dans lesquelles on apporte l'énergie nécessaire au fonctionnement du moteur soit par une injection indirecte de carburant gazeux, soit par une injection directe d'essence ;
- au moins une phase de bicarburation, dans laquelle on réalise une injection directe d'essence pour un mélange sous forme spécifique associée à une injection indirecte de carburant gazeux.

Cette méthode permet ainsi l'optimisation des performances, du rendement et des émissions de gaz polluants d'un moteur fonctionnant en mono ou en bicarburation sur une base injection directe d'un carburant liquide essence et injection indirecte d'un carburant gazeux.

Avantageusement, dans le mode de monocarburation, on injecte l'essence de façon à obtenir un mélange sous une forme stratifiée.

Selon une autre réalisation, dans le mode de monocarburation, on injecte l'essence de façon à obtenir un mélange sous une forme homogène.

De manière préférée, dans le mode de bicarburation, on injecte l'essence de façon à obtenir un mélange sous forme stratifiée par rapport au mélange air/gaz.

Alternativement, dans le mode de bicarburation, on injecte l'essence de façon à obtenir un mélange sous forme homogène.

Il est possible selon l'invention d'utiliser, au démarrage et pour les faibles charges, le mode de monocarburation.

De manière préférée, au démarrage à froid, on utilise l'injection indirecte de carburant gazeux pendant quelques cycles thermodynamiques du moteur.

Selon l'invention, pour les autres charges, on associe, en phase de bicarburation, l'injection indirecte de carburant gazeux avec une injection directe d'essence.

Préférentiellement, le carburant gazeux est injecté avec un mélange sous forme homogène dans chacun des modes de carburation.

La méthode, objet de la présente invention sera mieux comprise, à la lecture des tableaux ci-après.

**Démarrage :**

| | |
|---|---|
| 1 | Injection directe essence stratifiée |
| 2 | Injection gaz homogène |

**Faibles charges :**

| | | |
|---|---|---|
| 3 | Richesse 1 | Injection directe essence homogène |
| 4 | Mélange pauvre | Injection directe essence stratifiée |

**Charges partielles :**

| | | | |
|---|---|---|---|
| 5 | Richesse 1 | Injection gaz homogène | Injection directe essence homogène |
| 6 | | Injection gaz homogène | Injection directe essence stratifiée |
| 7 | Mélange pauvre | Injection gaz homogène | Injection directe essence homogène |
| 8 | | Injection gaz homogène | Injection directe essence stratifiée |

**Pleines charges :**

| | | | |
|---|---|---|---|
| 9 | Richesse 1 | Injection gaz homogène | Injection directe essence homogène |
| 10 | Mélange pauvre | Injection gaz homogène | Injection directe essence homogène |

Plusieurs approches possibles sont proposées suivant le mode d'injection et la nature des différents carburants injectés et en fonction de la charge du moteur.

Plus particulièrement, il est prévu un calculateur qui contiendra les cartographies des paramètres optimaux de fonctionnement du moteur sur toute la gamme d'utilisation possible.

Ainsi, les points de fonctionnement cartographique seront définis suivant des compromis spécifiques choisis par le constructeur et à la zone de fonctionnement, par exemple performances/cliquetis pour les fortes charges bas régimes, CO₂/rendement/NOₓ en charge partielle, ceci en jouant par exemple sur le ratio d'énergie introduite sous forme d'essence ou de gaz.

En fonction de la charge et du régime du moteur, les proportions respectives gaz/essence et/ou le phasage injection dans le cycle moteur du ou des carburants et/ou les durées d'injection et/ou les angles d'allumage optimaux seront ainsi déterminés par le calculateur selon des cartographies préalablement mémorisées.

La régulation par le calculateur d'autres paramètres pourra également être envisagée sans sortir du cadre de la méthode décrit dans la présente invention.

A titre d'exemple, lorsque le conducteur agit sur l'accélérateur, il fixe un point de fonctionnement et par conséquent la charge et le régime de son véhicule et, en fonction de la valeur de ces paramètres, correspondra dans la cartographie moteur un débit optimal de carburant (gaz, essence ou gaz + essence) et un ratio gaz/essence déterminé.

Les points de fonctionnement du moteur définis par le régime et la charge sont répartis dans différentes zones desdites cartographies définies par un mode de fonctionnement lié au mode de combustion imposé (avec mélange homogène ou stratifié).

De manière connue, une injection d'un carburant avec stratification du mélange consiste à obtenir dans la chambre de combustion un mélange carburé hétérogène dont les fractions riches sont localisées au voisinage du point d'allumage, de préférence constitué par une bougie.

Le processus de combustion avec mélange stratifié peut être schématisé de la manière suivante :
- la combustion est déclenchée dans une zone de richesse élevée pour permettre un allumage performant et assurer une bonne vitesse de combustion,
- la propagation de la flamme se poursuit alors dans la zone présentant un excès d'air, avec une vitesse suffisante.

En fonction des objectifs fixés par le motoriste en termes de performances, d'émissions de polluants, de consommation et d'agrément de conduite, un type de mélange est retenu (mélange stratifié ou homogène) et une répartition essence/gaz est imposée.

De plus, selon le compromis envisagé par le constructeur et en fonction de la charge du moteur, deux approches sont envisageables sans sortir du cadre de l'invention en fonction de la richesse globale obtenue à l'échappement : un fonctionnement à la stoechiométrie (richesse 1) ou en mélange pauvre (richesse < 1).

En outre et cela sans sortir du cadre de l'invention, le passage d'une zone de fonctionnement à l'autre fera en général l'objet d'une gestion spécifique selon toute technique connue de l'homme du métier. Par exemple, une modification de l'avance injection permettra avantageusement de piloter le passage d'un fonctionnement essence stratifiée à un fonctionnement essence homogène.

De même, toutes les autres fonctions communément assurées par le calculateur selon l'art antérieur pour notamment gérer le fonctionnement normal du moteur dans toutes ses phases possibles de fonctionnement et dans toutes les conditions possibles pourront être également envisagées.

En se référant maintenant aux tableaux, il peut être vu qu'au démarrage du moteur et en fonction des paramètres définis, le moteur est alimenté soit par une injection directe d'essence de manière à obtenir un mélange stratifié dans la chambre de combustion, en obtenant ainsi une combustion stratifiée, soit par une injection indirecte de gaz pour un mélange homogène, de façon à obtenir une combustion homogène dans la chambre de combustion.

Par cette étape, on obtiendra une amélioration sensible des capacités du moteur à démarrer dans des conditions identifiées comme froides et chaudes.

Préférentiellement, le démarrage à froid sera facilité par un fonctionnement au gaz durant quelques cycles thermodynamiques.

Le démarrage par la phase gazeuse durant les premiers cycles du moteur permet ainsi d'éviter les problèmes inhérents à une injection de liquide : vaporisation incomplète du carburant et dépôt de celui-ci sur les parois de la tubulure d'admission perturbant la richesse du mélange carburé.

Le démarrage à chaud sera facilité par l'injection directe d'essence dans la chambre de combustion garantissant un bon contrôle de la richesse et des émissions.

L'injection indirecte d'un carburant gazeux ou directe d'un carburant de type essence dans la chambre de combustion se traduira donc par un meilleur agrément d'utilisation du véhicule dans des conditions de mise en action aussi bien à froid qu'à chaud du moteur.

Dans le cas où l'énergie nécessaire au démarrage est préférentiellement fournie durant les premiers cycles du moteur par l'injection du carburant gazeux, celle-ci est progressivement remplacée par ou additionnée d'une injection directe d'essence avec stratification pour les faibles charges du moteur.

Si le démarrage a eu lieu avec une injection directe d'essence en mode stratifié, le fonctionnement du moteur se poursuivra, pour les faibles charges, sur le même type d'injection, si l'on a prévu de fonctionner avec un mélange pauvre, ou sera modifié par une injection directe d'essence avec mélange homogène pour un fonctionnement avec un mélange stoechiométrique (richesse 1).

Dans un mode de réalisation préférée de la méthode, la tenue thermique des injecteurs essence exposés en permanence aux flux thermiques dégagés au cours du cycle impose un débit d'essence minimum pour assurer le refroidissement nécessaire. De ce fait et à faible charge, seule l'injection directe d'essence en mode stratifié sera en général suffisante pour apporter l'énergie minimale nécessaire au bon fonctionnement du moteur.

Pour les charges partielles et cela quelque soit le type de carburation utilisé pour les faibles charges, le moteur fonctionnera en mode bicarburation avec une injection de gaz homogène associée soit à une injection directe d'essence pour un mélange stratifié, soit à une injection directe d'essence avec un mélange homogène.

En final, pour les pleines charges, seul un mélange homogène des carburants (essence et gaz) dans la chambre de combustion est envisagé et cela à la richesse 1 ou en mélange pauvre.

Ces caractéristiques permettent ainsi une augmentation du moteur à résister à l'apparition du cliquetis pour des performances élevées associées à des fonctionnements thermiquement contraignants.

Le recours au carburant gazeux en combustion homogène permet en effet grâce à son fort indice d'octane d'améliorer la résistance au cliquetis pour les conditions de fonctionnement contraignantes, par exemple pour les conditions de pleine charge à bas régime. Il est donc possible d'envisager une augmentation du taux de compression et par suite une amélioration du rendement de combustion du moteur donc de sensibles gains de consommation.

Plus particulièrement, dans le cas des moteurs suralimentés, le recours au gaz permet d'augmenter également les performances du moteur pour les conditions de pleines charges, ou bien de retenir des réglages optimaux permettant de réduire la consommation et ainsi les émissions.

De plus, avec la méthode selon l'invention, il est possible d'obtenir une gestion plus facile des stratégies de post-traitement à froid des effluents gazeux en utilisant l'injection essence pour produire des hydrocarbures imbrûlés à l'échappement et en réservant l'injection de carburant gazeux pour la combustion.

La forte résistance à l'oxydation du gaz naturel peut sous certaines conditions se traduire par une combustion incomplète de la fraction de gaz injectée. Une injection directe d'essence pendant la phase échappement permettrait selon la présente méthode de produire la quantité d'essence nécessaire contribuant à la réduction des imbrûlés au niveau du catalyseur.

Dans une application particulière de la méthode ci-dessus décrite, il est envisagé d'utiliser un moteur pouvant fonctionner en mode de bicarburation et de l'équiper de moyens d'injection directe d'essence et de moyens d'injection indirecte d'un carburant gazeux, ces moyens d'injections pouvant être, de manière connue, des injecteurs de type essence et des injecteurs de type gaz.

Pour fonctionner selon cette méthode, ce moteur sera également équipé de moyens de gestion, tel qu'un calculateur comme décrit précédemment, pour gérer ces moyens d'injection et cela en fonction de la charge du moteur.

## Revendications

1. Méthode de gestion d'un moteur à combustion interne pouvant fonctionner en bicarburation, **caractérisée en ce qu'**elle comprend :
- des phases de monocarburation, dans lesquelles on apporte l'énergie nécessaire au fonctionnement du moteur soit par une injection indirecte de carburant gazeux, soit par une injection directe d'essence ;
- au moins une phase de bicarburation, dans laquelle on réalise une injection directe d'essence pour un mélange sous forme spécifique associée à une injection indirecte de carburant gazeux.

2. Méthode de gestion selon la revendication 1, **caractérisée en ce que**, dans le mode de monocarburation, on injecte l'essence de façon à obtenir un mélange sous une forme stratifiée.

3. Méthode de gestion selon la revendication 1, **caractérisée en ce que**, dans le mode de monocarburation, on injecte l'essence de façon à obtenir un mélange sous une forme homogène.

4. Méthode de gestion selon la revendication 1, **caractérisé en ce que**, dans le mode de bicarburation, on injecte l'essence de façon à obtenir un mélange sous forme stratifiée par rapport au mélange air/gaz.

5. Méthode de gestion selon la revendication 1, **caractérisé en ce que**, dans le mode de bicarburation, on injecte l'essence de façon à obtenir un mélange sous forme homogène.

6. Méthode de gestion selon la revendication 1, **caractérisée en ce qu'**au démarrage et pour les faibles charges, on utilise le mode de monocarburation.

7. Méthode de gestion selon la revendication 6, **caractérisée en ce que**, au démarrage à froid, on utilise l'injection indirecte de carburant gazeux pendant quelques cycles thermodynamiques du moteur.

8. Méthode de gestion selon la revendication 6, **caractérisée en ce que**, pour les autres charges, on associe, en phase de bicarburation, l'injection indirecte de carburant gazeux avec une injection directe d'essence.

9. Méthode de gestion selon l'une des revendications précédentes, **caractérisé en ce que** le carburant gazeux est injecté avec un mélange sous forme homogène dans chacun des modes de carburation.

10. Méthode de gestion selon la revendication 1, **caractérisé en ce que** les paramètres de fonctionnement du moteur sont cartographiés en fonction du régime et de la charge dudit moteur.

11. Méthode de gestion selon la revendication 10, **caractérisé en ce que** lesdits paramètres de fonctionnement sont choisis dans le groupe constitué par les débits et les proportions respectives carburant gazeux/essence, la durée et/ou le moment de l'injection des carburants liquides et/ou gazeux, les angles d'allumage.

12. Méthode de gestion selon l'une des revendications précédentes, **caractérisé en ce que** le passage d'un mélange stratifié de l'essence à un mélange homogène de cette essence lors de l'augmentation de la charge du moteur se fait au moins par le contrôle de l'angle de début d'injection de l'essence.

13. Méthode selon l'une des revendications précédentes, **caractérisé en ce qu'**on impose un débit d'essence minimal nécessaire au refroidissement des injecteurs.

## Claims

1. A method for controlling an internal combustion engine able to operate with dual-fuel carburation, **characterised in that** it includes:
single-fuel carburation phases in which the energy necessary for the operation of the engine is introduced either by an indirect injection of gaseous fuel, or by a direct injection of petrol;
at least one dual-fuel carburation phase in which a direct injection of petrol is carried out for a mixture in a specific form associated with an indirect injection of gaseous fuel.

2. The controlling method according to Claim 1, **characterised in that**, in the single-fuel carburation mode, petrol is injected so as to obtain a mixture in a layered form.

3. The controlling method according to Claim 1, **characterised in that**, in the single-fuel carburation mode, petrol is injected so as to obtain a mixture in a homogeneous form.

4. The controlling method according to Claim 1, **characterised in that**, in the dual-fuel carburation mode, petrol is injected so as to obtain a mixture in a layered form in relation to the air/gas mixture.

5. The controlling method according to Claim 1, **characterised in that**, in the dual-fuel carburation mode, petrol is injected so as to obtain a mixture in a homogeneous form.

6. The controlling method according to Claim 1, **characterised in that**, upon starting and for low loads, the single-fuet carburation mode is used.

7. The controlling method according to Claim 6, **characterised in that**, upon cold starting, indirect injection of gaseous fuel over several thermodynamic cycles of the engine is used.

8. The controlling method according to Claim 6, **characterised in that**, for other loads, the indirect, injection of gaseous fuel is associated, in, a dual-fuel carburation phase, with a direct injection of petrol.

9. The controlling method according to one of the preceding claims, **characterised in that** gaseous fuel is injected with a mixture in a homogeneous form in each of the carburation modes.

10. The controlling method according to Claim 1, **characterised in that** the operating parameters of the engine are mapped according to the speed and load of said engine.

11. The controlling method according to Claim 10, **characterised in that** said operating parameters are chosen from the group constituted by the flow rates and respective proportions of gaseous fuel/petrol, the duration and/or the time of the injection of the liquid and/or gaseous fuels, and ignition angles.

12. The controlling method according to one of the preceding claims, **characterised in that** the transition from a layered petrol mixture to a homogeneous mixture of this petrol when the load is increased is effected at least by regulating the starting angle of the petrol injection.

13. The method according to one of the preceding claims, **characterised in that** a minimum petrol flow rate necessary for the cooling of the injectors is imposed.

## Patentansprüche

1. Verfahren zum Betrieb eines Verbrennungsmotors, der mit Doppelvergasung funktionieren kann, **dadurch gekennzeichnet, dass** es Folgendes umfasst:
- Einfachvergasungsphasen, bei denen die für die Funktion des Motors benötigte Energie sowohl durch indirekte Einspritzung von gasförmigem Kraftstoff als auch durch direkte Einspritzung von Benzin zugeführt wird;
- wenigstens eine Doppelvergasungsphase, bei der eine direkte Kraftstoffeinspritzung für eine spezifische Mischung, verbunden mit einer indirekten Einspritzung von gasförmigem Kraftstoff, ausgeführt wird.

2. Verfahren nach Anspruch 1, **dadurch gekennzeichnet, dass** man bei der Einfachvergasung dass Benzin so einspritzt, dass eine schichtförmige Mischung, erhalten wird.

3. Verfahren nach Anspruch 1, **dadurch gekennzeichnet, dass** man bei der Einfachvergasung dass Benzin so einspritzt, dass eine homogene Mischung, erhalten wird.

4. Verfahren nach Anspruch 1, **dadurch gekennzeichnet, dass** man bei der Doppelvergasung dass Benzin so einspritzt, dass eine schichtförmige Mischung im Verhältnis zur Mischung Gas/Luft, erhalten wird.

5. Verfahren nach Anspruch 1, **dadurch gekennzeichnet, dass** man bei der Doppelvergasung dass Benzin so einspritzt, dass eine homogene Mischung, erhalten wird.

6. Verfahren nach Anspruch 1, **dadurch gekennzeichnet, dass** beim Start und für geringe Belastungen die Einfachvergasung verwendet wird.

7. Verfahren nach Anspruch 6, **dadurch gekennzeichnet, dass** beim Kaltstart die indirekte Einspritzung von gasförmigem Kraftstoff während einiger thermodynamischer Motorzyklen verwendet wird.

8. Verfahren nach Anspruch 6, **dadurch gekennzeichnet, dass** für die anderen Belastungen bei der Doppelvergasung die indirekte Einspritzung von gasförmigem Kraftstoff mit einer direkten Einspritzung von Benzin verbunden wird.

9. Verfahren nach einem der vorhergehenden Ansprüche, **dadurch gekennzeichnet, dass** der gasförmige Kraftstoff in einer homogenen Mischung bei jeder Vergasungsart eingespritzt wird.

10. Verfahren nach Anspruch 1, **dadurch gekennzeichnet, dass** die Funktionsparameter des Motors, in Funktion der Drehzahl und der Belastung des genannten Motors kartographiert werden.

11. Verfahren nach Anspruch 10, **dadurch gekennzeichnet, dass** die genannten Funktionsparameter aus der Gruppe ausgewählt werden, bestehend aus den Durchflussmengen und den entsprechenden Verhältnissen gasförmiger Kraftstoff/Benzin, der Dauer und/oder dem Einspritzzeitpunkt der flüssigen und/oder gasförmigen Kraftstoffe, den Zündwinkeln.

12. Verfahren nach einem der vorhergehenden Ansprüche **dadurch gekennzeichnet, dass** der Übergang von einer schichtförmigen Mischung des Benzins in eine homogene Mischung dieses Benzins bei Erhöhung der Motorbelastung wenigstens durch die Kontrolle des Einspritzbeginnwinkels des Benzins erfolgt.

13. Verfahren nach einem der vorhergehenden Ansprüche **dadurch gekennzeichnet, dass** man eine für die Abkühlung der Einspritzventile benötigte Mindestbenzindurchflussmenge vorgibt.
